# EUROPEAN PATENT APPLICATION

(11) **EP 4 836 568 A1**
(43) Date of publication of application: **04.11.2026**
(21) Application number: 24911202.0
(22) Date of filing: 25.12.2024
(51) Int. Cl.: H04W 72/21

(54) **COMMUNICATION METHOD AND APPARATUS, AND COMPUTER READABLE STORAGE MEDIUM**

(30) Priority: 27.12.2023 CN 202311836999
(71) Applicant: Spreadtrum Communications (Shanghai) Co., Ltd., Shanghai 201203 (CN)
(72) Inventor: ZHANG, Meng, Shanghai 201203 (CN)
(74) Representative: Casalonga
(86) International application number: PCT/CN2024/142209
(87) International publication number: WO 2025/140278

(57) **Abstract**

A communication method and apparatus, and a computer-readable storage medium. The communication method comprises: receiving first information, the first information comprising trigger signaling, the trigger signaling being used for triggering the transmission of a first sounding reference signal (SRS), the first SRS being a SRS for sensing, and the first SRS being associated with a first physical uplink control channel; and sending the first SRS, and reporting a sensing result by using the first physical uplink control channel. The solution of the present disclosure can provide a suitable mechanism to configure an SRS so that the SRS can perform a sensing function, and can ensure that the sensing result is successfully reported, so that a terminal and a network side can reliably realize the sensing function on the basis of the SRS.

## Description

This application claims priority to CN Patent Application No. 202311836999.9, entitled "COMMUNICATION METHOD AND APPARATUS, AND COMPUTER READABLE STORAGE MEDIUM", and filed with the China National Intellectual Property Administration on December 27, 2023, the entirety of which is incorporated herein by reference.

### TECHNICAL FIELD

This application relates to the field of communication technology, and particularly to a communication method and apparatus, and computer-readable storage medium.

### BACKGROUND

In the Fifth-Generation (5G) mobile communication systems, existing protocols stipulate that the functional uses of the Sounding Reference Signal (SRS) mainly comprise four categories: uplink beam management, acquisition of uplink channel information for codebook based uplink transmission, acquisition of uplink channel information for non-codebook based transmission, and acquisition of downlink channel information for SRS based antenna switching.

Future protocols may adopt an SRS for a sensing function. Therefore, it is necessary to define the configuration of an SRS to support a sensing function, and the corresponding protocol modifications required to implement the sensing function, so that a terminal and the network side may reliably implement the sensing function based on the SRS. For example, in a scenario where a terminal sends and receives its own signal, the terminal is unable to correctly report a sensing result to a base station or other terminals based on existing protocols.

### SUMMARY

The technical problems to be addressed by this application is how to ensure that a terminal and a network side can reliably implement a sensing function based on SRS.

To solve at least one of the above technical problems, an embodiment of this application provides a communication method. The communication method comprises: receiving first information comprising trigger signaling for triggering transmission of a first sounding reference signal, the first sounding reference signal being a sounding reference signal for sensing and being associated with a first physical uplink control channel; sending the first sounding reference signal, and reporting a sensing result using the first physical uplink control channel.

Optionally, the first information comprises a first indication field configured to indicate the first physical uplink control channel.

Optionally, the first information is carried in downlink control information for scheduling uplink transmission.

Optionally, the first indication field is further configured to indicate a second physical uplink control channel used for carrying a feedback result of a physical downlink shared channel; or, the first information further comprises a second indication field configured to indicate the second physical uplink control channel used for carrying the feedback result of the physical downlink shared channel.

Optionally, the first physical uplink control channel is further used for carrying the feedback result of the physical downlink shared channel.

Optionally, the first information is carried in downlink control information for scheduling downlink transmission.

Optionally, an association relationship between the first sounding reference signal and the first physical uplink control channel is configured via higher-layer signaling.

Optionally, the trigger signaling corresponds to a first resource set, and the sending the first sounding reference signal comprises: sending the first sounding reference signal using resources in the first resource set corresponding to the trigger signaling.

Optionally, the trigger signaling comprises a third indication field configured to indicate the first resource set.

Optionally, the third indication field is further configured to indicate a second resource set used for sending sounding reference signals other than the first sounding reference signal; or, the trigger signaling further comprises a fourth indication field configured to indicate the second resource set used for sending the sounding reference signals other than the first sounding reference signal.

Optionally, the method further comprises: receiving second information comprising a first offset value used for determining a time interval between reception of the trigger signaling and transmission of a physical uplink control channel.

Optionally, the first offset value is configured on a per-resource basis.

Optionally, the first information comprises a second offset value, wherein the time interval is jointly determined based on the first offset value and the second offset value.

Optionally, the first information comprises a first flexible indication field configured to indicate the second offset value.

Optionally, the first flexible indication field is further configured to indicate a third offset value used for determining a time interval between triggering transmission of a second sounding reference signal and transmission of the second sounding reference signal, the second sounding reference signal being a sounding reference signal other than the first sounding reference signal; or, the first information further comprises a second flexible indication field configured to indicate the third offset value used for determining the time interval between triggering transmission of the second sounding reference signal and transmission of the second sounding reference signal, the second sounding reference signal being a sounding reference signal other than the first sounding reference signal.

Optionally, the method further comprises: reporting capability information comprising a time interval for sensing, the time interval for sensing being a minimum time interval between reception of the trigger signaling and transmission of the physical uplink control channel.

Optionally, the method further comprises: receiving second information comprising a plurality of candidate first resource sets, wherein resources in the first resource sets are used for sending the first sounding reference signal.

Optionally, a length of resources in at least one of the first resource sets is greater than a length of a single slot; and/or, resources in at least one of the first resource sets are configured on a per-symbol basis; and/or, resources in at least one of the first resource sets are sent with periodic repetition.

Optionally, the first resource sets are dedicated to the first sounding reference signal, or, the first resource sets are resource sets configured for sensing.

Optionally, the first information is carried via downlink control information, and/or, the second information is carried via higher-layer signaling.

To solve at least one of the above technical problems, an embodiment of this application further provides a communication method. The communication method comprises: sending first information comprising trigger signaling for triggering transmission of a first sounding reference signal, the first sounding reference signal being a sounding reference signal for sensing and being associated with a first physical uplink control channel; receiving a sensing result using the first physical uplink control channel, the sensing result being obtained by transmission of the first sounding reference signal.

Optionally, the first information comprises a first indication field configured to indicate the first physical uplink control channel.

Optionally, the first indication field is further configured to indicate a second physical uplink control channel used for carrying a feedback result of a physical downlink shared channel; or, the first information further comprises a second indication field configured to indicate the second physical uplink control channel used for carrying the feedback result of the physical downlink shared channel.

Optionally, the first physical uplink control channel is further used for carrying the feedback result of the physical downlink shared channel.

Optionally, an association relationship between the first sounding reference signal and the first physical uplink control channel is configured via higher-layer signaling.

Optionally, the trigger signaling comprises a third indication field configured to indicate a first resource set, wherein the first sounding reference signal is sent using resources in the first resource set.

Optionally, the third indication field is further configured to indicate a second resource set used for sending sounding reference signals other than the first sounding reference signal; or, the trigger signaling further comprises a fourth indication field configured to indicate the second resource set used for sending the sounding reference signals other than the first sounding reference signal.

Optionally, the method further comprises: sending second information comprising a first offset value used for determining a time interval between reception of the trigger signaling and transmission of a physical uplink control channel.

Optionally, the first information comprises a first flexible indication field configured to indicate a second offset value, wherein the time interval is jointly determined based on the first offset value and the second offset value.

Optionally, the first flexible indication field is further configured to indicate a third offset value used for determining a time interval between triggering transmission of a second sounding reference signal and transmission of the second sounding reference signal, the second sounding reference signal being a sounding reference signal other than the first sounding reference signal; or, the first information further comprises a second flexible indication field configured to indicate the third offset value used for determining the time interval between triggering transmission of the second sounding reference signal and transmission of the second sounding reference signal, the second sounding reference signal being a sounding reference signal other than the first sounding reference signal.

Optionally, the method further comprises: receiving capability information comprising a time interval for sensing, the time interval for sensing being a minimum time interval between reception of the trigger signaling and transmission of the physical uplink control channel.

Optionally, the method further comprises: sending second information comprising a plurality of candidate first resource sets, wherein resources in the first resource sets are used for sending the first sounding reference signal.

Optionally, a length of resources in at least one of the first resource sets is greater than a length of a single slot; and/or, resources in at least one of the first resource sets are configured on a per-symbol basis; and/or, resources in at least one of the first resource sets are sent with periodic repetition.

Optionally, the first resource sets are dedicated to the first sounding reference signal, or, the first resource sets are resource sets configured for sensing.

To solve at least one of the above technical problems, an embodiment of this application further provides a communication apparatus. The communication apparatus comprises: a receiving module configured to receive first information comprising trigger signaling for triggering transmission of a first sounding reference signal, the first sounding reference signal being a sounding reference signal for sensing and being associated with a first physical uplink control channel; a sending module configured to send the first sounding reference signal, and reporting a sensing result using the first physical uplink control channel.

To solve at least one of the above technical problems, an embodiment of this application further provides a communication apparatus. The communication apparatus comprises: a sending module configured to send first information comprising trigger signaling for triggering transmission of a first sounding reference signal, the first sounding reference signal being a sounding reference signal for sensing and being associated with a first physical uplink control channel; a receiving module configured to receive a sensing result using the first physical uplink control channel, the sensing result being obtained by transmission of the first sounding reference signal.

To solve at least one of the above technical problems, an embodiment of this application further provides a computer-readable storage medium. The computer-readable storage medium, which is a non-volatile storage medium or a non-transitory storage medium, has computer programs stored thereon. The computer programs, when executed by a processor, cause the steps of the above method to be performed.

To solve at least one of the above technical problems, an embodiment of this application further provides a communication apparatus. The communication apparatus comprises a memory and a processor. The memory stores computer programs executable on the processor. The computer programs, when being executed by the processor, cause the steps of the above method to be performed.

Compared with the prior art, the technical solutions of the embodiments of this application have the following beneficial effects.

An embodiment of this application provides a communication method. The communication method comprises: receiving first information comprising trigger signaling for triggering transmission of a first sounding reference signal, the first sounding reference signal being a sounding reference signal for sensing and being associated with a first physical uplink control channel; sending the first sounding reference signal, and reporting a sensing result using the first physical uplink control channel.

This implementation provides a suitable mechanism by which an SRS is configured to support a sensing function, and a sensing result is successfully reported, which enables a terminal and a network side to reliably implement the sensing function based on the SRS. In specific, by establishing a binding relationship between the SRS for sensing (i.e., the first SRS) and the PUCCH (e.g., the first PUCCH), the terminal is enabled to report a sensing result to the network device via the uplink channel, which ensures reliable implementation of the sensing function for both sides.

Furthermore, by configuring resources for an SRS for sensing via the second information, the terminal is enabled to use the first SRS for a sensing function.

Furthermore, a length of, a granularity of, or whether a repetition transmission is applied to resources in the first resource set differs from that in the second resource set, thereby improving sensing accuracy and ensuring reliable implementation of the sensing function.

### BRIEF DESCRIPTION OF THE DRAWINGS

FIG. 1 is a flowchart of a communication method according to an embodiment of this application;
FIG. 2 is a schematic structural diagram of a communication apparatus according to an embodiment of this application;
FIG. 3 is a schematic structural diagram of another communication apparatus according to an embodiment of this application.

### DETAILED DESCRIPTION

To make the above objectives, features, and beneficial effects of this application more comprehensible, the specific embodiments of this application are illustrated in detail below with reference to the accompanying drawings.

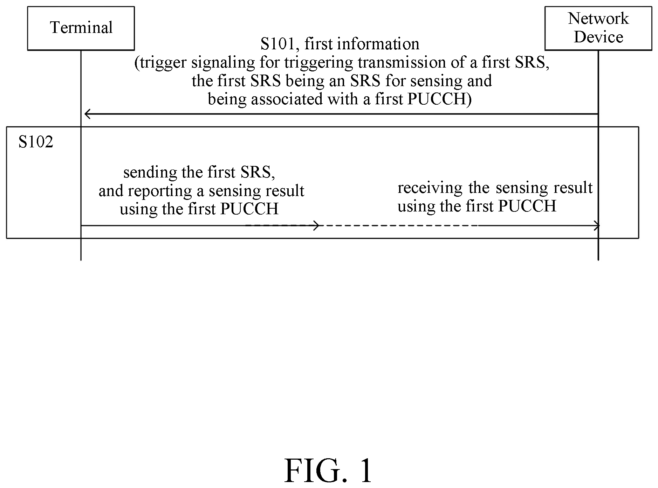

FIG. 1 is a flowchart of a communication method according to an embodiment of this application.

This implementation may be applied to 5G systems, for example, in an application scenario of the 5G systems where an SRS is configured for sensing. In a sensing scenario, a terminal may send an SRS and receive an echo signal of the SRS, and then process the echo signal with a sensing algorithm. The processed sensing result may be reported to a base station or a sensing function (SF) via an uplink channel. The sensing function may be an element of a core network. Alternatively, a terminal may send an SRS for sensing (referred to as a first SRS), and a base station (e.g., gNB) may receive the echo signal. Alternatively, a terminal A may send a first SRS, and a terminal B may receive the echo signal. The sensing result may be used by the terminal which sent the first SRS, or by the base station, or by the SF, or by other terminals.

In a specific implementation, in the communication method described in steps S101 to S102 below, the steps performed by a terminal may be executed by a chip with communication functions in the terminal, or by a baseband chip in the terminal; the steps performed by a network device may be executed by a chip with communication functions in the network device, or by a baseband chip in the network device.

Specifically, with reference to FIG. 1, the communication method of this implementation may include the following steps.

Step S101: the network device sends first information to the terminal, the first information comprising trigger signaling for triggering transmission of a first SRS, the first SRS being an SRS for sensing and being associated with a first Physical Uplink Control Channel (PUCCH). Accordingly, the terminal receives the first information.

Step S102: the terminal sends the first SRS, and reports a sensing result using the first PUCCH. Accordingly, the network device receives the sensing result using the first PUCCH.

In some embodiments, the first SRS may comprise, in terms of time domain characteristics (also referred to as time domain type), one of the following: a periodic (P) SRS (also referred to as statically scheduled SRS), a semi-persistent (SP) SRS (also referred to as semi-statically scheduled SRS), and an aperiodic (A) SRS.All parameters of a configured periodic SRS resource are configured via higher-layer signaling (e.g., Radio Resource Control (RRC) signaling), and periodic transmission is conducted by the terminal based on the configured parameters.

Periodic transmission is conducted on a configured semi-persistent SRS resource upon activation. The difference between the semi-persistent SRS and the periodic SRS is that: the terminal does not send the SRS upon receiving a configuration for the semi-persistent SRS resource via the higher-layer signaling, but starts to periodically send the first SRS in the corresponding semi-persistent SRS resource upon receiving activation signaling for the semi-persistent SRS resource sent via the Medium Access Control (MAC) layer. The terminal stops sending the first SRS upon receiving a deactivation command for the semi-persistent SRS resource sent via the MAC layer.

A configured aperiodic SRS resource is activated via Downlink Control Information (DCI). Each time the terminal receives SRS trigger signaling for triggering the aperiodic SRS resource, it performs a transmission of the first SRS in the corresponding triggered SRS resource. In this example, the first information in step S101 may comprise trigger signaling carried in the DCI. Furthermore, the terminal may also receive RRC signaling to obtain configuration information for the first SRS (the related description of the second information is provided below).

Next, taking the aperiodic SRS as an example, the configuration of the first SRS and the uplink reporting are described in detail below.

In step S102, in a mode where a terminal sends and receives its own signal, after sending the first SRS, the terminal receives its echo signal, analyzes the echo signal with a sensing algorithm, and reports the sensing result to the base station or other terminals. In this scenario, the sensing result needs to be shared with the base station or other terminals, and different contents may be sensed by different devices.

In a specific implementation, a binding relationship may be established between the first SRS and the first PUCCH, which enables the terminal to send the sensing result using the first PUCCH. For example, when the DCI triggers the first SRS, the first PUCCH resource is configured for reporting the sensing result correspondingly.

In specific, the first information may comprise a first indication field configured to indicate the first PUCCH.

Furthermore, the DCI carrying the first information may comprise DCI with DCI format 0_1, 0_2, 1_1, 1_2, or 2_3.

In some embodiments, for DCI used for scheduling uplink transmission (i.e., DCI formats 0_1 and 0_2), such DCI does not have a PUCCH Resource Indicator (PRI) field originally. Therefore, in this implementation, a new indication field is introduced in such DCI to convey the PUCCH used for reporting the sensing result of the first SRS.

For example, DCI with a new format may be designed for scheduling uplink transmission, and the DCI with the new format comprises a PRI field configured to indicate the resource of the first PUCCH.

In some embodiments, for DCI used for scheduling downlink transmission (i.e., DCI formats 1_1 and 1_2), the existing PRI field in such DCI may be reused as the first indication field.

In specific, the first indication field may be used to indicate the first PUCCH and a second PUCCH. The second PUCCH is used for carrying a feedback result of a Physical Downlink Shared Channel (PDSCH).That is, the first indication field indicates two PUCCH resources simultaneously, namely, the resource of the first PUCCH and the resource of the second PUCCH. Accordingly, a PDSCH Hybrid Automatic Repeat Request (HARQ) Acknowledgement (ACK) and the sensing result are reported on different PUCCHs, respectively.

For example, the first indication field may be increased from an existing few bits (e.g., 3 bits) to 6 bits, wherein the higher 3 bits are used to indicate the second PUCCH, and the lower 3 bits are used to indicate the first PUCCH.

For another example, in the first indication field with 6 bits, the higher 3 bits may correspond to the PUCCH resource indication for carrying the sensing result, and the lower 3 bits may correspond to the PUCCH resource indication for carrying the PDSCH HARQ-ACK.

In some embodiments, for DCI used for scheduling downlink transmission (i.e., DCI formats 1_1 and 1_2), the existing PRI field of such DCI may be reused to indicate the first PUCCH.

In specific, the first information may comprise a first indication field and a second indication field. The first indication field is used to indicate the first PUCCH, and the second indication field is used to indicate the second PUCCH. The first indication field and the second indication field may be two independent PRI fields.

That is, two PRI indication fields are used to indicate the two PUCCHs, respectively, so that the PDSCH HARQ-ACK and the sensing result are reported on different PUCCHs, respectively.

For example, the PRI indication field in the first information may be increased to 6 bits, which is divided into two independent fields: a 3-bit field serving as the first indication field configured to indicate the first PUCCH, and the remaining 3-bit field serving as the second indication field configured to indicate the second PUCCH.

In some embodiments, for DCI used for scheduling downlink transmission (i.e., DCI formats 1_1 and 1_2), the PUCCH indicated by the PRI field in such DCI may be reused for sending both the sensing result and a feedback result of the PDSCH directly.

In specific, the first PUCCH may be used for carrying the sensing result and the feedback result of the PDSCH. That is, the PDSCH HARQ-ACK and the sensing result are reported on the same PUCCH. Optionally, the order of the PDSCH HARQ-ACK and the sensing result in the Uplink Control Information (UCI) may be the PDSCH HARQ-ACK first followed by the sensing result, or the sensing result first followed by the PDSCH HARQ-ACK.

In this example, the sensing result may be considered as new CSI content, such as a new Channel State Information-Reference Signal (CSI-RS).

From the above, an implementation where the PDSCH HARQ-ACK and the sensing result are reported on two PUCCHs separately, is preferably applicable to scenarios where the processing timeline does not allow for combined reporting. In specific, given the processing capability of the terminal, if a completion time for the process from transmitting the first SRS and receiving the echo signal, through processing the received echo signal into sensing information and packaging the sensing information to obtain a sensing result, deviates significantly from a completion time for processing a feedback result of the PDSCH, it is deemed to fall within the scenarios where the processing timeline does not allow combined reporting. In these scenarios, it is preferable to report the sensing result and the feedback result of the PDSCH on two separate PUCCHs, which facilitates latency reduction.

If the processing capability of the terminal allows the time for generating the sensing result and the time for generating the feedback result of the PDSCH to be relatively close, that is, the terminal may complete processing of both the PDSCH HARQ-ACK and the sensing result before the PUCCH resource indicated by the PRI field, it is deemed fall into the scenarios where the processing timeline allows combined reporting. In these scenarios, it is preferable to report the sensing result and the feedback result of the PDSCH in one PUCCH, which facilitates saving signaling overhead and reducing communication load.

In a specific implementation, an association relationship between the first SRS and the first PUCCH may be configured via higher-layer signaling. For example, an aperiodic SRS for sensing may be configured to be directly associated with one PUCCH, via RRC signaling. In specific, one SRS resource set may be associated with one PUCCH resource, or one or more SRS resources may be associated with one PUCCH resource.

In a specific implementation, before step S101, this implementation may further comprise a step in which the network device sends second information to the terminal, the second information comprising a plurality of candidate first resource sets, resources in the first resource set being used for sending the first SRS. Accordingly, the terminal receives the second information.

In specific, the network may pre-configure, for the terminal, a plurality of candidate first resource sets, via the second information, and then activate or trigger, via the first information, one of the plurality of first resource sets for the terminal to send the first SRS.

In some embodiments, the time domain granularity of the first SRS for sensing may be longer than that of a second legacy SRS for other purposes, which depends on accuracy requirements for velocity or angle.

For example, a length of resources in at least one of the first resource sets may be greater than a length of a single slot, e.g., greater than 14 OFDM symbols. The larger the number of symbols of the resource for the first SRS for sensing, the higher the sensing accuracy is. Accordingly, the resources in the first resource set may be allowed to span a plurality of slots.

For another example, resources in at least one of the first resource sets are configured on a per-symbol basis. For example, a resource may be configured to start from a first symbol of a first slot and end at a fifth symbol of a second slot.

For yet another example, a plurality of time domain granularities may be configured in a mixed manner, e.g., one resource may comprise x slots and y symbols.

In one embodiment, resources in at least one of the first resource sets may be sent with periodic repetition.

In specific, a repetition factor may be introduced into the second information to indicate the number of repetitions of resources in the first resource set.

For example, the length of the resources in the first resource set may be configured to be 6 OFDM symbols, with 4 periodic repetitions.

In some embodiments, the first resource set may be configured as a resource set dedicated to the first SRS. For example, similar to an SRS for positioning, a configuration for an independent SRS for sensing may be provided in the second information.

In some embodiments, the first resource set may be a resource set configured for sensing. For example, a new usage option (i.e., a sensing type) may be added to the usage of an existing SRS resource set. Thus, an SRS resource set in RRC signaling may be configured as the first resource set for sensing, or as a second resource set for other purposes. The second resource set is used for sending a second SRS.

In some embodiments, the second information may be carried via higher-layer signaling, e.g., RRC signaling.

In a specific implementation, SRS may be classified into a first SRS for sensing and a second SRS for other purposes based on the usage (also referred to as the function). The other purposes may comprise uplink beam management, acquisition of uplink channel information for codebook based uplink transmission, acquisition of uplink channel information for non-codebook based transmission, and acquisition of downlink channel information for SRS based antenna switching.

Furthermore, the number of existing SRS resource sets may be increased to configure a first resource set dedicated to the first SRS. For example, the network side may pre-configure a plurality of candidate SRS resource sets, including at least one candidate first resource set and a plurality of candidate second resource sets. The resources in the first resource set are used for sending the first SRS, and the resources in the second resource set are used for sending the second SRS.

In a specific implementation, taking the aperiodic SRS as an example, the trigger signaling may correspond to the first resource set, and each time the terminal receives trigger signaling for triggering the aperiodic SRS resource, it conducts one transmission of the first SRS using the triggered SRS resource (e.g., the resources in the first resource set).

Accordingly, in step S102, the terminal sends the first SRS using the resources in the first resource set corresponding to the trigger signaling.

Furthermore, the trigger signaling may comprise a third indication field configured to indicate the first resource set.

In some embodiments, the existing associations between trigger states and SRS resource sets may be maintained. In specific, the SRS trigger signaling in a legacy DCI typically comprises 2 bits, in which the trigger state may be indicated to implicitly indicate the SRS resource set associated with the trigger state. Optionally, the network side may configure the PUCCH resource associated with the SRS resource set or SRS resource via higher-layer signaling. When the DCI triggers the SRS resource set, the sensing information based on the SRS measurement is sent on the PUCCH resource associated with the SRS resource set or SRS resource.

Furthermore, in this specific example, the first indication field may be configured not only to indicate the first resource set, but also to indicate a second resource set used for transmission of other SRS than the first SRS (i.e., a second SRS). Accordingly, the number of bits of the third indication field in the SRS trigger signaling of the DCI may be increased from 2 bits to, for example, 4 bits. In these 4 bits of the third indication field, the first 2 bits are used for indicating the second resource set, and the last 2 bits are used for indicating the first resource set.

In some embodiments, the third indication field may be an independent trigger indication field. Accordingly, the trigger signaling may comprise the third indication field (introduced as a new field compared to the existing SRS trigger signaling of the DCI) and a fourth indication field (similar to a state indication in the existing SRS trigger signaling of the DCI) configured to indicate the second resource set.

For example, the trigger signaling in the first information may be increased to 4 bits, which are divided into two independent fields: a 2-bit field serving as the third indication field configured to indicate the first resource set, and the remaining 2-bit field serving as the fourth indication field configured to indicate the second resource set.

In a specific implementation, the second information may comprise a first offset value used for determining a time interval (slot offset) between reception of the trigger signaling and transmission of the PUCCH.

In specific, different from the offset value configured for the second SRS (e.g., via RRC signaling), which is a time interval between triggering transmission of the second SRS (e.g., via DCI) and transmission of the second SRS by the terminal, the first offset value in this implementation is the time interval between the first SRS and the PUCCH.

For example, the length of the first offset value may be greater than the length of the offset value configured for the second SRS. Thus, the terminal has sufficient time to receive the echo signal and process the sensing information.

In some embodiments, the first offset value may be configured on a per-resource basis. That is, configuration of the first offset value may be implemented on a resource-wise basis. The resource may be a slot, a symbol, or other time-domain resource granularity, which are not limited in this application.

In specific, compared to the resources in the second resource set, in which one resource with the best signal quality is selected from the second resource set for feedback during communication, the resources in the first resource set in this implementation are used for sensing, and thus the first SRS needs to be sent on the resources in the first resource set in different directions. Furthermore, there are differences in the echo signals fed back from different directions (e.g., different arrival times at the terminal). Therefore, suitable first offset values may be assigned for each of the resources in the first resource set.

For example, the first offset values may be associated with beam directions. Assuming the first resource set comprises Resource 1, Resource 2, and Resource 3, the terminal uses Resource 1 to send the first SRS in Beam Direction 1, uses Resource 2 to send the first SRS in Beam Direction 2, and uses Resource 3 to send the first SRS in Beam Direction 2. Accordingly, Resource 1 may correspond to a first offset value of 1, and Resources 2 and 3 may correspond to a first offset value of 2.

In a specific implementation, the first information may comprise a second offset value, wherein the second offset value may be indicated by a first flexible indication field. Furthermore, the time interval between reception of the trigger signaling and transmission of the PUCCH may be jointly determined based on the first offset value and the second offset value.

Similarly, the first information may further comprise a third offset value configured for the second SRS. The time interval between triggering transmission of the second SRS and transmission of the second SRS may be jointly determined based on the offset value configured for the second SRS according to the second information and the third offset value.

In some embodiments, the second offset value and the third offset value may share the same flexible indication field.

In specific, the first flexible indication field may be configured to indicate both the second offset value and the third offset value.For example, a candidate set of values {2, 4, 6, 8} for the first flexible indication field may be pre-defined, pre-configured by the network, or specified by a protocol. The first dynamic indication field in the first information may select {2, 8} from the candidate set to be indicated to the terminal. Accordingly, the terminal determines that the third offset value is 2 and the second offset value is 8.

In some embodiments, the second offset value and the third offset value may have independent flexible indication fields, respectively.

In specific, the first information may further comprise a second flexible indication field configured to indicate the third offset value.

For example, a candidate set of values {2, 4, 6, 8} for the first flexible indication field and a candidate set of values {2, 4, 6} for the second flexible indication field may be pre-defined, pre-configured by the network, or specified by a protocol. The first dynamic indication field in the first information may select {8} from the candidate set of values {2, 4, 6, 8} to be indicated to the terminal, and the second dynamic indication field may select {2} from the candidate set of values {2, 4, 6} to be indicated to the terminal. Accordingly, the terminal determines that the third offset value is 2 and the second offset value is 8.

For another example, the first dynamic indication field in the first information may select {6} from the candidate set of values {2, 4, 6, 8} to be indicated to the terminal, and the second dynamic indication field may select {6} from the candidate set of values {2, 4, 6} to be indicated to the terminal. Accordingly, the terminal determines that both the third offset value and the second offset value are 6.

In a variation, the third offset value may be omitted, that is, the second offset value may be used to determine the time interval for the first SRS and also the time interval for the second SRS.

In a specific implementation, before the step S101, this implementation may further comprise a step in which the terminal reports capability information to the network device, the capability information comprising a time interval for sensing, the time interval for sensing being a minimum time interval between reception of the trigger signaling and transmission of the PUCCH. Accordingly, the network device receives the capability information reported by the terminal.

Furthermore, in response to receiving the capability information, the network device determines the first offset value accordingly. For example, the network will not configure a first offset value that exceeds the capability of the terminal, e.g., the first offset value is configured to be not smaller than the minimum time interval.

For example, a new parameter k3 may be introduced in the capability information, to indicate the time interval between the SRS (e.g., the first SRS) and the transmission of the PUCCH.

In a specific implementation, in step 102, if the first SRS is determined to be sent, the first SRS may be sent according to a default beam direction.

In specific, when the network has not configured a beam direction for the first SRS, the terminal may send the first SRS according to the default beam direction to perform the sensing function successfully.

In some embodiments, the default beam direction may be the beam direction in which an object was successfully sensed latest. For example, in an intrusion detection scenario, the beam direction used in the latest successful object sensing may be deemed as the default beam direction for the current first SRS. Intrusion detection may be, for example, spatial domain detection, such as a detection of a drone intruding into a private residence.

In some embodiments, the default beam direction may be determined based on a configured listening range.

In specific, the network may pre-configure a listening range X for the terminal. For example, the listening range X may be configured for the terminal, via pre-definition, higher-layer signaling, or flexible signaling.

Furthermore, the terminal may autonomously determine a coverage angle for each of the resources in the configured first resource set, i.e., a beam width to be covered when the first SRS is sent on each of the resources. This allows the terminal the freedom to implement the beam. For example, assuming X = 180 degrees and the first resource set comprises 6 resources, 30 degrees may be scanned on each of the resources on average.

For another example, assuming X = 180 degrees, the terminal may scan 180 degrees using each of the resources while sending the first SRS.

For yet another example, assuming X = 180 degrees and the first resource set comprises 9 resources, the terminal may determine to scan 100 degrees using one of the resources while sending the first SRS and scan 10 degrees using each of the remaining 8 resources while sending the first SRS.

In a variation, in step 102, if the first SRS is determined to be sent and the network has pre-configured a beam direction, the terminal may send the first SRS using the resources in the first resource set according to the configured beam direction. This is beneficial for interference management of the network.

From the above, this implementation provides a suitable mechanism by which an SRS is configured to support a sensing function, and a sensing result is successfully reported, which enables a terminal and a network side to reliably implement the sensing function based on the SRS. In specific, by establishing a binding relationship between the SRS for sensing (i.e., the first SRS) and the PUCCH (e.g., the first PUCCH), the terminal is enabled to report a sensing result to the network device via the uplink channel, which ensures reliable implementation of the sensing function for both sides.

Furthermore, by configuring resources for an SRS for sensing via the second information, the terminal is enabled to use the first SRS for a sensing function.

Furthermore, a length of, a granularity of, or whether a repetition transmission is applied to resources in the first resource set differs from that in the second resource set, thereby improving sensing accuracy and ensuring reliable implementation of the sensing function.

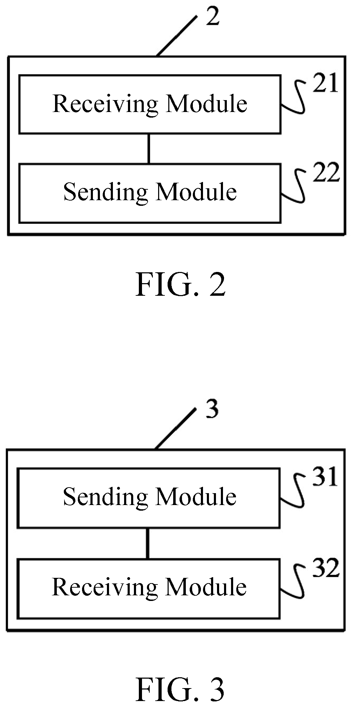

FIG. 2 is a schematic structural diagram of a communication apparatus 2 according to an embodiment of this application. Those skilled in the art should understand that, the communication apparatus 2 described in the embodiment may be used to implement the technical solution of the method described in the above embodiment of FIG. 1. Specifically, with reference to FIG. 2, the communication apparatus 2 described in the embodiment may comprise: a receiving module 21 configured to receive first information comprising trigger signaling for triggering transmission of a first sounding reference signal, the first sounding reference signal being a sounding reference signal for sensing and being associated with a first physical uplink control channel; and a sending module 22 configured to send the first sounding reference signal, and reporting a sensing result using the first physical uplink control channel.

For more details on the operation principles, operation methods of the communication apparatus 2, reference may be made to the above related descriptions of FIG. 1, which will not be repeated here.

In a specific implementation, the above communication apparatus 2 may correspond to a chip with communication functions in a terminal; or correspond to a chip with data processing functions, such as a System-On-a-Chip (SOC), a base-band chip, etc.; or correspond to a chip module comprising a chip with communication functions in a terminal; or correspond to a chip module comprising a chip with data processing functions; or correspond to a terminal.

FIG. 3 is a schematic structural diagram of another communication apparatus 3 according to an embodiment of this application. Those skilled in the art should understand that, the communication apparatus 3 described in the embodiment may be used to implement the technical solution of the method described in the above embodiment of FIG. 1.

Specifically, with reference to FIG. 3, the communication apparatus 3 described in the embodiment may comprise: a sending module 31 configured to send first information comprising trigger signaling for triggering transmission of a first sounding reference signal, the first sounding reference signal being a sounding reference signal for sensing and being associated with a first physical uplink control channel; and a receiving module 32 configured to receive a sensing result using the first physical uplink control channel, the sensing result being obtained by transmission of the first sounding reference signal.

For more details on the operation principles, operation methods of the communication apparatus 3, reference may be made to the above related descriptions of FIG. 1, which will not be repeated here.

In a specific implementation, the above communication apparatus 3 may correspond to a chip with communication functions in a network device; or correspond to a chip with data processing functions, such as a System-On-a-Chip (SOC), a base-band chip, etc.; or correspond to a chip module comprising a chip with communication functions in a network device; or correspond to a chip module comprising a chip with data processing functions; or correspond to a network device.

In a specific implementation, the various modules/units comprised in various apparatuses and products described in the above embodiments may be software modules/units, hardware modules/units, or partly software modules/units and partly hardware modules/units.

For example, for apparatuses or products applied to or integrated into a chip, each module/unit comprised may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit comprised may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal, each module/unit comprised may be implemented in hardware such as circuits, different modules/units may be located in the same component (e.g., chip, circuit module, etc.) or different components of the terminal, or at least some modules/units may be implemented by software programs executing on a processor integrated into the terminal, and the remaining (if any) modules/units may be implemented in hardware such as circuits.

An embodiment of this application further provides a computer-readable storage medium. The computer-readable storage medium, which is a non-volatile storage medium or a non-transitory storage medium, has computer programs stored thereon. The computer programs, when executed by a processor, cause the steps of the communication method provided in any of the above embodiments to be performed. Preferably, the storage medium may comprise a computer-readable storage medium such as a non-volatile memory or a non-transitory memory. The storage medium may comprise ROM, RAM, magnetic disk, or optical disk, etc.An embodiment of this application further provides another communication apparatus. The communication apparatus comprises a memory and a processor. The memory has stored thereon computer programs executable on the processor. The computer programs, when being executed by the processor, cause the steps of the communication method provided in the above embodiment of FIG. 1 to be performed. The communication apparatus may be integrated into a terminal, or the communication apparatus may be, for example, a terminal.

The terminal in the embodiment of this application is a device with functions of wireless communication, which may be refer as a user, a user terminal, a terminal device, a mobile station (MS), a mobile terminal (MT), an access terminal device, a vehicle-mounted terminal device, an industrial control terminal device, a User Equipment (UE), a UE unit, a UE station, a mobile station, a remote station, a remote terminal device, a mobile device, a UE terminal device, a wireless communication device, a UE agent, or a UE apparatus, etc. The user terminal may be fixed or mobile. It should be noted that the user terminal may support at least one of wireless communication technologies, such as Long Term Evolution (LTE), New Radio (NR), etc. For example, the user terminal may be a mobile phone, a pad, a desktop computer, a laptop, an all-in-one computer, a vehicle-mounted terminal, a Virtual Reality (VR) terminal device, an Augmented Reality (AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, a cellular phone, a cordless phone, a Session Initiation Protocol (SIP) phone, a Wireless Local Loop (WLL) station, a Personal Digital Assistant (PDA), a handheld device with functions of wireless communication, a computing device, or other processing device connected to a wireless modem, a wearable device, a terminal device in a future mobile communication network, or a terminal device in a future evolved Public Land Mobile Network (PLMN), etc. In some embodiments of this application, the user terminal may also be an apparatus with functions of transceiver, such as a chip system. The chip system may comprise a chip and may also comprise other discrete devices.

The network device in the embodiments of this application is a device with functions of wireless communication with a user terminal, and may also be referred to as an access network device, a radio access network (RAN) device, or an access network element. The network device may support at least one of wireless communication technologies, such as LTE, NR, etc. For example, the network devices include but are not limited to: a next-generation Node B (gNB) in the fifth-generation (5G) mobile communication systems, an evolved Node B (eNB), a radio network controller (RNC), a Node B (NB), a base station controller (BSC), a base transceiver station (BTS), a home base station (e.g., Home evolved Node B, or Home Node B (HNB)), a baseband unit (BBU), a transmitting and receiving point (TRP), a transmitting point (TP), a mobile switching center, etc. The network device may also be a wireless controller, a Centralized Unit (CU), and/or a Distributed Unit (DU) in a Cloud Radio Access Network (CRAN) scenario, or the access network device may be a relay station, an access point, a vehicle-mounted device, a terminal device, a wearable device, a network device in future mobile communications, or a network device in a future evolved PLMN, etc. In some embodiments, the network device may also be an apparatus with functions of wireless communication with the user terminal, such as a chip system. For example, the chip system may comprise a chip and may also comprise other discrete devices.

Although this application is disclosed as above, this application is not limited thereto. Those of ordinary skill in the art may make various changes and modifications without departing from the spirit and scope of this application. Therefore, the protection scope of this application shall be subject to the scope defined by the claims.

## Claims

1. A communication method, **characterized in that**, the method comprises:
receiving first information comprising trigger signaling for triggering transmission of a first sounding reference signal, the first sounding reference signal being a sounding reference signal for sensing and being associated with a first physical uplink control channel;
sending the first sounding reference signal, and reporting a sensing result using the first physical uplink control channel.

2. The method according to claim 1, **characterized in that**, the first information comprises a first indication field configured to indicate the first physical uplink control channel.

3. The method according to claim 2, **characterized in that**, the first information is carried in downlink control information for scheduling uplink transmission.

4. The method according to claim 2, **characterized in that**, the first indication field is further configured to indicate a second physical uplink control channel used for carrying a feedback result of a physical downlink shared channel; or, the first information further comprises a second indication field configured to indicate the second physical uplink control channel used for carrying the feedback result of the physical downlink shared channel.

5. The method according to claim 1, **characterized in that**, the first physical uplink control channel is further used for carrying the feedback result of the physical downlink shared channel.

6. The method according to claim 1 or 2 or 4 or 5, **characterized in that**, the first information is carried in downlink control information for scheduling downlink transmission.

7. The method according to claim 1, **characterized in that**, an association relationship between the first sounding reference signal and the first physical uplink control channel is configured via higher-layer signaling.

8. The method according to any one of claims 1 to 7, **characterized in that**, the trigger signaling corresponds to a first resource set, and the sending the first sounding reference signal comprises:
sending the first sounding reference signal using resources in the first resource set corresponding to the trigger signaling.

9. The method according to claim 8, **characterized in that**, the trigger signaling comprises a third indication field configured to indicate the first resource set.

10. The method according to claim 9, **characterized in that**, the third indication field is further configured to indicate a second resource set used for sending sounding reference signals other than the first sounding reference signal; or, the trigger signaling further comprises a fourth indication field configured to indicate the second resource set used for sending the sounding reference signals other than the first sounding reference signal.

11. The method according to any one of claims 1 to 10, **characterized in that**, the method further comprises:
receiving second information comprising a first offset value used for determining a time interval between reception of the trigger signaling and transmission of a physical uplink control channel.

12. The method according to claim 11, **characterized in that**, the first offset value is configured on a per-resource basis.

13. The method according to claim 11 or 12, **characterized in that**, the first information comprises a second offset value, wherein the time interval is jointly determined based on the first offset value and the second offset value.

14. The method according to claim 13, **characterized in that**, the first information comprises a first flexible indication field configured to indicate the second offset value.

15. The method according to claim 14, **characterized in that**, the first flexible indication field is further configured to indicate a third offset value used for determining a time interval between triggering transmission of a second sounding reference signal and transmission of the second sounding reference signal, the second sounding reference signal being a sounding reference signal other than the first sounding reference signal; or, the first information further comprises a second flexible indication field configured to indicate the third offset value used for determining the time interval between triggering transmission of the second sounding reference signal and transmission of the second sounding reference signal, the second sounding reference signal being a sounding reference signal other than the first sounding reference signal.

16. The method according to any one of claims 11 to 15, **characterized in that**, the method further comprises:
reporting capability information comprising a time interval for sensing, the time interval for sensing being a minimum time interval between reception of the trigger signaling and transmission of the physical uplink control channel.

17. The method according to any one of claims 1 to 16, **characterized in that**, the method further comprises:
receiving second information comprising a plurality of candidate first resource sets, wherein resources in the first resource sets are used for sending the first sounding reference signal.

18. The method according to claim 17, **characterized in that**, a length of resources in at least one of the first resource sets is greater than a length of a single slot; and/or, resources in at least one of the first resource sets are configured on a per-symbol basis; and/or, resources in at least one of the first resource sets are sent with periodic repetition.

19. The method according to claim 8 or 9 or 10 or 17 or 18, **characterized in that**, the first resource sets are dedicated to the first sounding reference signal, or, the first resource sets are resource sets configured for sensing.

20. The method according to any one of claims 11 to 18, **characterized in that**, the first information is carried via downlink control information, and/or, the second information is carried via higher-layer signaling.

21. A communication method, **characterized in that**, the communication method comprises:
sending first information comprising trigger signaling for triggering transmission of a first sounding reference signal, the first sounding reference signal being a sounding reference signal for sensing and being associated with a first physical uplink control channel;
receiving a sensing result using the first physical uplink control channel, the sensing result being obtained by transmission of the first sounding reference signal.

22. The method according to claim 21, **characterized in that**, the first information comprises a first indication field configured to indicate the first physical uplink control channel.

23. The method according to claim 22, **characterized in that**, the first indication field is further configured to indicate a second physical uplink control channel used for carrying a feedback result of a physical downlink shared channel; or, the first information further comprises a second indication field configured to indicate the second physical uplink control channel used for carrying the feedback result of the physical downlink shared channel.

24. The method according to claim 21, **characterized in that**, the first physical uplink control channel is further used for carrying the feedback result of the physical downlink shared channel.

25. The method according to claim 21, **characterized in that**, an association relationship between the first sounding reference signal and the first physical uplink control channel is configured via higher-layer signaling.

26. The method according to claim 21, **characterized in that**, the trigger signaling comprises a third indication field configured to indicate a first resource set, wherein the first sounding reference signal is sent using resources in the first resource set.

27. The method according to claim 26, **characterized in that**, the third indication field is further configured to indicate a second resource set used for sending sounding reference signals other than the first sounding reference signal; or, the trigger signaling further comprises a fourth indication field configured to indicate the second resource set used for sending the sounding reference signals other than the first sounding reference signal.

28. The method according to any one of claims 21 to 27, **characterized in that**, the method further comprises:
sending second information comprising a first offset value used for determining a time interval between reception of the trigger signaling and transmission of a physical uplink control channel.

29. The method according to claim 28, **characterized in that**, the first information comprises a first flexible indication field configured to indicate a second offset value, wherein the time interval is jointly determined based on the first offset value and the second offset value.

30. The method according to claim 29, **characterized in that**, the first flexible indication field is further configured to indicate a third offset value used for determining a time interval between triggering transmission of a second sounding reference signal and transmission of the second sounding reference signal, the second sounding reference signal being a sounding reference signal other than the first sounding reference signal; or, the first information further comprises a second flexible indication field configured to indicate the third offset value used for determining the time interval between triggering transmission of the second sounding reference signal and transmission of the second sounding reference signal, the second sounding reference signal being a sounding reference signal other than the first sounding reference signal.

31. The method according to any one of claims 21 to 30, **characterized in that**, the method further comprises:
receiving capability information comprising a time interval for sensing, the time interval for sensing being a minimum time interval between reception of the trigger signaling and transmission of the physical uplink control channel.

32. The method according to any one of claims 21 to 31, **characterized in that**, the method further comprises:
sending second information comprising a plurality of candidate first resource sets, wherein resources in the first resource sets are used for sending the first sounding reference signal.

33. The method according to claim 32, **characterized in that**, a length of resources in at least one of the first resource sets is greater than a length of a single slot; and/or, resources in at least one of the first resource sets are configured on a per-symbol basis; and/or, resources in at least one of the first resource sets are sent with periodic repetition.

34. The method according to claim 26 or 27 or 32 or 33, **characterized in that**, the first resource sets are dedicated to the first sounding reference signal, or, the first resource sets are resource sets configured for sensing.

35. A communication apparatus, **characterized in that**, the communication apparatus comprises:
a receiving module configured to receive first information comprising trigger signaling for triggering transmission of a first sounding reference signal, the first sounding reference signal being a sounding reference signal for sensing and being associated with a first physical uplink control channel;
a sending module configured to send the first sounding reference signal, and reporting a sensing result using the first physical uplink control channel.

36. A communication apparatus, **characterized in that**, the communication apparatus comprises:
a sending module configured to send first information comprising trigger signaling for triggering transmission of a first sounding reference signal, the first sounding reference signal being a sounding reference signal for sensing and being associated with a first physical uplink control channel;
a receiving module configured to receive a sensing result using the first physical uplink control channel, the sensing result being obtained by transmission of the first sounding reference signal.

37. A computer-readable storage medium, which is a non-volatile storage medium or a non-transitory storage medium, having computer programs stored thereon, **characterized in that**, the computer programs, when executed by a processor, cause the steps of the method according to any one of claims 1 to 34 to be performed.

38. A communication apparatus, comprising a memory and a processor, wherein the memory stores computer programs executable on the processor, **characterized in that**, the computer programs, when executed by the processor, cause the steps of the method according to any one of claims 1 to 34 to be performed.
